# EUROPEAN PATENT APPLICATION

(11) **EP 4 654 752 A1**
(43) Date of publication of application: **26.11.2025**
(21) Application number: 24177563.4
(22) Date of filing: 23.05.2024
(51) Int. Cl.: H05B 47/125, G06F 3/01, G06V 40/20

(54) **METHOD FOR CALIBRATION A CAMERA-CONTROLLED LIGHTING SYSTEM, METHOD FOR OPERATING THE CAMERA-CONTROLLED LIGHTING SYSTEM, AND CAMERA-CONTROLLED LIGHTING SYSTEM**

(71) Applicant: Zumtobel Lighting GmbH, 6850 Dornbirn (AT)
(72) Inventor: Böhnel, Michael, 6851 Dornbirn (AT)
(74) Representative: Beder, Jens

(57) **Abstract**

The invention regards the calibration and control of the camera controlled lighting system (1) based on a captured camera image. For calibrating the camera controlled lighting system (1), a transformation scheme between a coordinate system of a lighting system and a coordinate system of a camera (3) is performed and stored. The transformation scheme is determined based on a predefined pattern used for illuminating an environment of the lighting system (2) and capturing the illuminated area by the camera (3). The correspondence of features in the predefined elimination pattern in the captured image is then analyzed in order to determine the transformation scheme between the two coordinate systems. The transformation scheme is then used to transform coordinates of objects identified in an image captured by the camera (3) into the coordinate system of the lighting system (2). Based on the coordinate system transformation, a control signal is generated to control light emission by the lighting system (2) with respect to an identified object in a captured image by the camera (3).

## Description

The invention regards controlling a lighting system based on a camera capture, a method for controlling a respective camera-controlled lighting system and a method for operating a camera-controlled lighting system.

Modern lighting systems provide a variety of functions that allow to adjust light emission and illumination of an area in the periphery of the lighting system. In addition to basic functionalities like dimming, which was available already for conventional lighting systems, LED based lighting systems offer even more sophisticated functions. Matrix light sources, for example, enable to tailor the illuminated area according to needs, as it is well known from modern vehicles.

In case that adaptation of a lighting parameter is based on a camera captured image, there is a problem that the optical axes of the camera and the lighting system usually differ from each other. In order to achieve a satisfying result with high reproducibility it is therefore necessary to map the camera image based on which the adaption of the emitted light shall be controlled on the lighting system. This means that calibration of the system is required.

It is therefore an object of the present invention to enable an accurate illumination with arbitrarily adjusted lighting parameters based on an image captured by a camera.

This object is achieved by the method according to the independent claims and the respective camera controlled lighting system. The dependent claims define advantageous features and aspects of the present invention.

The invention provides a method for calibrating a camera-controlled lighting system. The camera-controlled lighting system has a lighting system for illuminating an indoor area The illumination of the indoor area by the lighting system is adjustable in a lighting system coordinate system. The camera-calibrated lighting system further comprises a camera having a field of view overlapping with the indoor area which can be illuminated. This means that the field of view does not necessarily have to be identical to the illuminated area, but at least portions of the area that can be illuminated by the lighting system and the field of view of the camera correspond to each other.

The calibration of the camera-controlled lighting system is performed by first presenting a defined pattern by the lighting system. Such a pattern could be a chequered pattern of a chessboard, for example. However, this is not limiting. Other patterns may also be used. The relevant aspect is that the used pattern is known in advance so as to allow to identify positions or features in the pattern in the captured image captured by the camera. The contrast in the known, predefined pattern presented by the lighting system shall be high.

When the pattern is presented, the camera detects the illuminated pattern. In case that the ambient light is not sufficient to capture a suitable image, the camera might output a signal in response to which additional light sources are switched on or the brightness of the light emitted to present the defined pattern is increased. Based on the captured image, computing means determine a transformation scheme for transforming a camera coordinate system into a coordinate system of the lighting system based on the detected illuminated pattern. This is achieved by identifying certain features in the pattern and in the captured image and recognize their correspondence. Thus, for each such feature or significant point in the pattern and correspondingly in the image, a pair of coordinates can be identified. Based on these pairs of coordinates corresponding to the lighting system's coordinate system and the camera's coordinate system, a transformation scheme is determined. The transformation scheme allows transforming coordinates known in the camera coordinate system to coordinates in the lighting system coordinate system. Thus, based on a captured image and coordinates identified therein, the lighting system, considering the coordinate transformation, can be controlled to adjust a parameter with respect to the corresponding coordinates in the lighting system coordinate system.

Since the camera-controlled lighting system comprises a camera anyway, it is preferred to use the camera to initiate the calibration process. Thus, based on the captured image from the camera, gesture determination can be performed. A gesture, defined in advance, can thus be used to start the calibration of the system. This is specifically advantageous, when the environment in which the system shall operate changes from time to time. It is to be noted that the calibration itself does not require a long period of time. The easy way of triggering the calibration routine is therefore helpful to quickly calibrate the system after a change, while more inconvenient techniques might cause that the user does not calibrate the system and is, in the end, disappointed of its capabilities.

According to another advantageous aspect, the determination of the transformation scheme is based on a plurality of presented patterns. Using a plurality of images and patterns improves the calibration result. Generally, it is to be noted that the calibration does not need to be performed for every potential coordinate pair in the coordinate system but at least 4 pairs are considered to be necessary. Preferably, the transformation scheme is a perspective transformation. However, the present invention is not limited to such perspective transformation. Other transformation technologies are known in the art and may be used for the present invention. Examples can be found in https://docs.opencv.org/4.x/d6/d55//tutorial table of content calib3d.html or https://docs.opencv.org/4.x/da/d54/group imgproc transform.html. It is to be noted that there are software modules available that can be selected to perform the determination of the transform scheme for the camera- controlled lighting system.

The present invention further comprises, according to another aspect of the present invention, a method for operating a camera-controlled lighting system for illuminating an indoor area, comprising the steps of calibrating a camera-controlled lighting system using the method according to the aspect described above. The method for the operation of the camera-controlled lighting system comprises the steps of capturing an image by the camera and identifying at least one object in the captured image and adapting at least one lighting parameter with respect to the identified object. Controlling the system using the coordinate transformation scheme determined in the calibration process explained above leads to exact control of the lighting system such that locations in the real world that are identified based on an image captured by the camera, can be precisely targeted by the lighting system.

If, for example, an object, identified in the captured image, shall be illuminated with a certain color, it can be achieved that the location illuminated with the desired color exactly corresponds to the real world location of the object identified in the captured image.

Preferred examples for the adaption of the at least one lighting parameter include at least one of:
- selectively changing a brightness or color of light illuminating the identified object relative to light illuminating the object's environment, and
- generating a light pattern for illuminating the identifying object or its periphery.

It is to be noted that the first aspect means that it is possible to adjust the brightness or color (or both) that is used for illuminating the identified object to differ from light around the object, or to maintain the lighting parameters for the identified object, but change the respective parameters outside the identified object..

According to an embodiment, the at least one lighting parameter is fixedly maintained for a minimum period of time. This is specifically advantageous in situations where objects are removed from the scene, but the maintained lighting situation resembles the unchanged situation, for example by maintaining a shadow at the location, where the object was.

The camera may further be used to identify, not only for carrying out the calibration procedure, gestures that are presented by a user of the system. The adaption of the at least one lighting parameter is selected according to a gesture perceived by the camera. There may be stored a predefined set of gestures that can be determined. The camera captures a moving image to allow comparison between the moving image and the stored gestures. A table defines a association of a gesture and a specific adaption to be selected. The use of gestures increases the comfort for the user when operating the system.

Preferably, the image is a moving image and the adaptation is continuously updated based on the sequence of images in the moving image. Controlling the lighting system based on a moving image with continuous update of the adaptation allows to follow movements of objects.

The camera-controlled lighting system comprises a lighting system for illuminating an indoor area, the illumination of the indoor area by the lighting system being adjustable in a lighting system coordinate system, a camera having a field of view overlapping with the indoor area which can be illuminated, and a control unit. The control unit is configured to control the lighting system and, preferably, also the camera, and to determine and apply a transformation scheme based on an image captured by the camera according to one of the methods explained in greater detail above.

Preferably, the camera-controlled lighting comprises a light source in a 2-dimensional rectangular arrangement. According to another advantageously aspect, the optical axes of the lighting system and the camera are aligned.

The camera and the lighting system might be integrated into a single unit so that information (coordinates) can be provided directly to the control unit. However, according to a specifically preferred embodiment, the camera and the lighting system are spatially separated and the camera and the lighting system are communicatively coupled to the control unit. This has the advantage that the perspective of the camera is not bound to the preferred position of the lighting system. The flexibility is thus increased.

Finally, it is particularly preferred to integrate the control unit into the lighting system. This has the specific advantage that the lighting system can be equipped with the control unit and the lighting system can easily be enhanced to the camera-controlled lighting system. The provision of a camera, which does not need to provide any specific functionality, is sufficient to improve the system and achieve a camera-controlled lighting system. This solution increases the functionality at reasonable costs. It is furthermore possible to integrate the control unit into the lighting control unit.

The invention will now be explained with reference to the attached drawings in which
- Fig. 1: shows a block diagram of a system according to an embodiment of the present invention,
- Fig. 2: shows an example for illustrating the adaptation of a lighting parameter with respect to an identified object, and
- Fig. 3: is a simplified flowchart illustrating a calibration phase and a regular operation phase according to the present invention

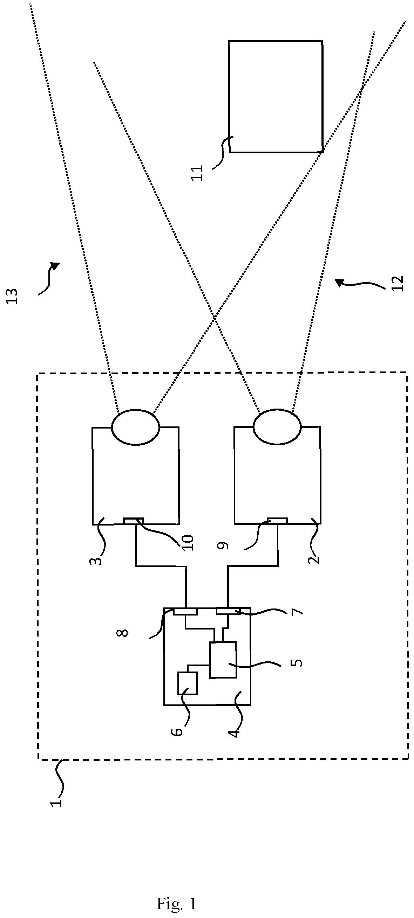

In figure 1, a camera controlled lighting system 1 according to the present invention is shown with its main components. The, controlled lighting system 1 shown in figure 1 is an integrated system, in which a lighting system 2, a camera 3 and a control unit 4 together form an intelligent digital luminaire. The lighting system 2 mainly comprises a digital light source, preferably a spotlight. Figure 1 shows a single camera 3, but the camera 3 may also be a stereo camera.

The lighting system 2 comprises a controllable digital light source, which may have a resolution of at least 32 segments. The light source may have a two-dimensional rectangular arrangement f the segments with preferably 32 × 32 segments. Alternatively, light sources with fixed segments that can be illuminated but which are not rectangular could be used as well. A light source could be an LED matrix, digital lighting processor or similar light sources that allows to selectively illuminate segments which commonly form the illuminated area of the light source. The lighting system 2 is configured to receive a control signal defining the light to be emitted, in particular the segments to be illuminated. The control signal includes information on the segments to be illuminated and preferably at least one light parameters such as brightness or color for each of the segments. The light source may emit white light but is not limited to white light. For example, it could also emit RGB.

The control unit 4 forms a processing means which, based on information received from the camera 3, determines a transformation scheme to transform a camera coordinate system into a coordinate system of the lighting system 2. Processing the information received from the camera 3 is done by a processor 5 which is connected to a memory 6. The determined transformation scheme is stored in the memory 6 so that it is available at a later point in time during regular operation of the camera controlled lighting system 1.

In addition to determining the transformation scheme by then control unit 4, the control unit 4 is configured to generate an output control signal for the lighting system 2. The control unit 4 comprises an output interface 7 for outputting the control signal to the lighting system 2, which, accordingly, comprises an input interface 9.

The camera 3 provides an image to an input interface 8 of the control unit 4, which is connected to an image output interface 10 of the camera 3. The camera 3 captures an image corresponding to a field of view 13 of the camera 3. The field of view 13 of the camera 3 overlaps with an illuminated area, indicated by 12 in the drawing. Thus, light, which is emitted by the lighting system 2 illuminating a certain area in the environment of the camera controlled lighting system illuminates an area in the environment of the camera controlled lighting system an image of which is captured by the camera 3. Preferably, the field-of-view of the camera 3 is chosen such that the entire illuminated area can be captured by the camera 3.

Figure 1 shows a situation in which an object 11 is present in the area 12 that can be illuminated by the lighting system 2 and which is also within the field of view 13 of the camera 3. The control unit 4 is also able to identify gestures that can be used for controlling the camera controlled lighting system 1. Such gesture detection itself is known in the art and may be applied to a sequence of images captured by the camera 3. In case that an operator performs a gesture within the field of view 13 of the camera 3, a sequence of images captured by the camera 3 (moving image) is provided to the control unit 4. The control unit 4 identifies a gesture and controls the lighting system 2 accordingly or starts the calibration process as it will be explained later on in greater detail.

Generally, the calibration process starts with presenting a predefined pattern by the lighting system 2. The lighting system 2 is controlled accordingly by the control unit 4 to emit light corresponding to the predefined pattern. Information on the predefined pattern can be stored in the memory 6 and the respective control signal is generated by the processor 5 based on the information stored in the memory 6. A preferred example for such a predefined pattern is a chessboard, but other preferably regular patterns can be used as well. Using a pattern with rectangular segments is specifically advantageous when the light source has in a two-dimensional rectangular arrangement.

When the area in the environment is illuminated by lighting system 2, the camera 3 captures an image representing the light pattern illuminating the environment of the camera controlled lighting system 1. Since the light pattern is predefined, coordinates of features of the pattern are known in the coordinate system of the lighting system 2. Thus, these features, for example edges or corners in the defined pattern, can be identified in the image taken by the camera 3. The control unit 4, controlling the lighting system 2 to emit light according to the predefined pattern, therefore has knowledge about the coordinates of a feature in the coordinate system of the lighting system 2 and also in the coordinate system of the camera 3. These coordinates of the same feature in the coordinate system of the lighting system 2 and the coordinate system of the camera 3 are then processed in order to determine a transformation scheme. The determination is performed by the processor 5. The resulting transformation scheme is stored in the memory 6 and is, during regular operation retrieved from the memory 6 for controlling the lighting system 2 with respect to a location corresponding to coordinates identified in an image captured by the camera 3.

A preferred transformation is perspective transformation including at least four coordinate pairs. However, other transformations may be used as well. It is to be noted, that such transformation between different coordinate systems are known in the art and existing software modules can be used in order to determine the transformation scheme once the image with the predefined pattern of light emitted by the lighting system 2 is received by the control unit 4.

According to a preferred embodiment, a plurality of images captured by the camera 3 can be used for calibrating the camera controlled lighting system 1. The plurality of images may be captured for a corresponding plurality of patterns, for example, a 7×8 chessboard and a 4×5 chessboard. Using a plurality of different patterns in captured images allows to identify additional coordinate pairs, which helps to overcome the problems of having bad reference coordinates. This may be the case, when foreground objects occlude image plane or corners have bad reflection properties. Further, capturing a plurality of images for a single pattern allows to average and avoids errors due to moving objects in the calibration area. Both aspects may be combined and serve an improvement of accuracy.

For example, the camera 3 captures an image including the object 11 as illustrated in figure 1. Coordinates of the object 11 in the captured image are transformed using the stored transformation scheme into the coordinate system of the lighting system 2. According to the transformed coordinates, the lighting system 2 can then be controlled with respect to the identified object 11. One example is, that an object is identified in the captured image and the object shall be highlighted in the environment. Thus, the control unit 4 generates a control signal causing the lighting system 2 to emit light only in the segments corresponding to the detected object 11.

It is to be noted, that highlighting the detected object 11 is only one example for adapting a lighting parameter. Other examples may include changing the light color or highlighting the periphery of the detected object 11 instead of the detected object 11 itself.

Detection of an object 11 in the environment of the camera controlled lighting system 1 is based on commonly known detection algorithms including AI, deep learning neural networks or the like. It is also possible to apply digital filtering to the image, e.g., detection of edges. Further, illumination may be based on color coordinates to achieve blue/green box effects.

The adaptation of at least one lighting parameter with respect to an identified object in the captured image can be predefined, which means that memory 6 holds a table associating an identified object with an adaptation of a lighting parameter to be performed. For example, the control unit 4 may search the captured image for the specific object for which the adaptation of a light parameter is stored in the table. Different objects can be associated with different adaptations of parameters.

The camera controlled lighting system 1 can also be configured to regularly capture new images by the camera 3. In that case the adaptation with respect to the location of an identified object in the captured images is updated accordingly with each new captured image and movements of the identified objects will be reflected in the adaptation of the lighting parameters. In case that an identified object is moved and the adaptation requires highlighting by increasing the brightness level for the identified object, the highlighted area will then follow the movement of the identified object.

On the other hand, it might be desired that a certain adaptation of a light parameter is maintained at least for a minimum time interval. In such a case, even if the object is removed before the new image is captured by the camera 3, the area originally defined by the identified object 11 will still be highlighted (or to be more general the respective adaptation of the light parameters with respect to the initially identified object 11 is maintained).

As mentioned above, the illustrated camera controlled lighting system 1 is an integrated system. However, the lighting system 2 and the camera 3 can also be arranged in a distributed manner. In such a case, the camera 3 and the lighting system 2 are communicatively connected to the control unit 4 using wired or wireless communication. According to preferred embodiment, the control unit 4 is integrated in the lighting system 2. The generation of a control signal for the lighting system 2 is required in any case for intelligent digital luminaires that enable selectively defining lighting parameters for individual segments. Thus, including the functionality of calibrating a system based on a captured image from a camera 3 requires only moderate effort of adaptation of the control unit 4 included in the lighting system 2. Such a lighting system 2 is then connected by wires or wirelessly to a camera 3 providing captured images. Preferably, the control unit 4 is further configured to send control signals to the camera 3 allowing to trigger capturing new images by the camera 3.

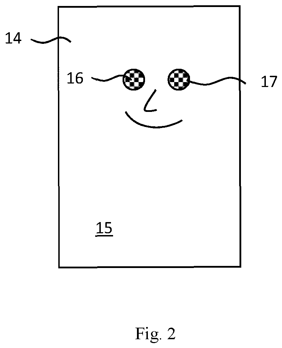

Figure 2 provides an example, in which circles that are identified in the captured image shall be illuminated with a chequered pattern. Accordingly, in case that a person draws an image like the simplified face shown in figure 2, the eyes represented by circles in the drawing will be identified by the control unit 4. Accordingly, the coordinates of the eyes in the image captured by the camera 3 are transformed into the coordinate system of the lighting system 2. Based on this transformation, the control unit 4 generates a control signal controlling the lighting source 2 to emit light creating the chequered pattern only in the area defined by the circles in the drawing.

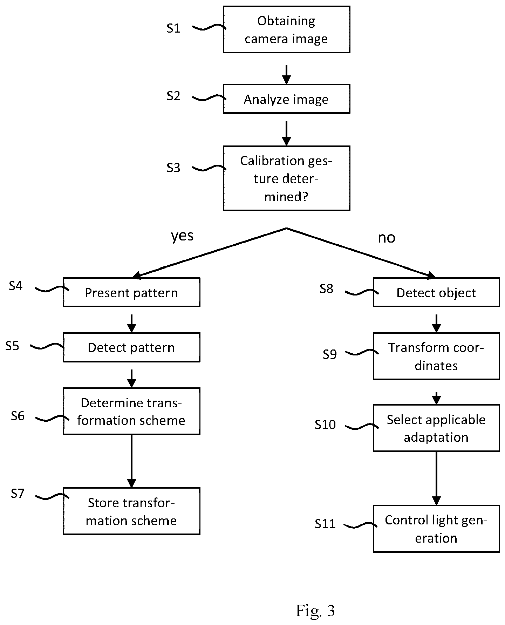

Figure 3 summarizes the procedure of calibrating the camera controlled lighting system 1 and operating the camera controlled lighting system 1 based on determination of objects 11 in captured camera images.

In step S1, the system starts with obtaining a camera image. The image is then analyzed in step S2, specifically in order to determine whether the captured image (or sequence of images) includes a calibration gesture made by an operator of the system (S3). Such a calibration gesture is a gesture made by a human from which it is concluded that the operator intends to start the calibration routine. If such a calibration gesture is identified, the lighting system 2 is controlled to emit light of a predefined pattern. This predefined pattern is presented in step S4.

The pattern presented by the lighting system 2 is then detected by the camera 3 by capturing an image which at least partially overlaps with the illuminated area to which the predefined pattern is presented by the lighting system 2.

As explained above in greater detail, the corresponding coordinates in the coordinate system of the lighting system 2 and the camera coordinate system of the camera 3 are evaluated in order to determine a transformation scheme. The determination of the transformation scheme in step S6 is performed by the processor 5 in the control unit 4. The determined transformation scheme is then stored in the memory 6 in step S6.

In case that no calibration gesture is determined in step S3, the system will operate in its regular operation mode. In such a case, in the image captured and analyzed in step S2 an image may be detected in step S8. It is then checked if for the detected object a corresponding adaptation of lighting parameters is stored. Accordingly, the applicable adaptation of the lighting parameters is selected in step S 10. If the corresponding adaptation of lighting parameters is stored in the camera controlled lighting system 1, the coordinates of the position of the detected object in the captured image is transformed into the coordinate system of the lighting system 2. Based on the transformed coordinates of the detected object and the applicable adaptation of lighting parameters, a control signal for controlling light emission of the lighting system 2 is generated. In step S 11 the generated control signal is provided to the lighting system 2 and the lighting system 2 is caused to emit light with an adapted lighting parameter with respect to the location of the identified object 11.

It is to be noted that the expression "with respect to the identified object" means any relation that can be determined from an identification of the location of the identified object. This means that either the area in which the identified object 11 is present is adapted by adapting the lighting parameters, or in the area in which the identified object 11 is present no change in the lighting parameters is performed, but the lighting parameters in the periphery of the identified object 11 are adapted according to a prestored rule which is the basis for the selection of the applicable adaptation of lighting parameters.

## Claims

1. A method for calibrating a camera-controlled lighting system having:
- a lighting system (2) for illuminating an indoor area, the illumination of the indoor area by the lighting system (2) being adjustable in a lighting system coordinate system, and
- a camera (3) having a field of view overlapping with the indoor area which can be illuminated comprising the steps of:
presenting a defined pattern (S4) in an area illuminated by the lighting system (2) detecting the illuminated pattern (S5) by the camera (3), and
determining, by computing means (4), a transformation scheme (S6) for transforming a camera coordinate system into a coordinate system of the lighting system (1) based on the detected illuminated pattern and storing the determined transformation scheme (S7).

2. Method according to claim 1, wherein the presentation of the defined pattern (S4), detection of the pattern (S5) and determination of the transformation scheme (S6) is triggered by a gesture perceived by the camera (3).

3. Method according to claim 1 or 2, wherein the determination of the transformation scheme (S is based on a plurality of presented patterns.

4. A method for operating a camera-controlled lighting system (1) for illuminating an indoor area, comprising the steps of calibrating a camera-controlled lighting system (1) using the method according to one of claims 1 to 3, the camera-controlled lighting system having:
- a lighting system (2) for illuminating an indoor area, the illumination of the indoor area by the lighting system (2) being adjustable in a lighting system coordinate system, and
- a camera (3) having a field of view overlapping with the indoor area which can be illuminated, comprising the steps of:
capturing an image (S1) by the camera (3) and identifying at least one object (11) (S8) in the captured image and adapting at least one lighting parameter (S10, S11) with respect to the identified object.

5. Method according to claim 4, wherein the adaption (S10, S11) of the at least one lighting parameter includes at least one of:
- selectively changing a brightness or color of light illuminating the identified object (11) relative to light illuminating the object's environment (S11), and
- generating a light pattern for illuminating the identifying object (11) or its periphery (S11).

6. Method according to claim 4 or 5, wherein the at least one lighting parameter is fixedly maintained for a minimum period of time.

7. Method according to one of claims 4 to 6, wherein the adaption of the at least one lighting parameter is selected according to a gesture (S10) perceived by the camera (3).

8. Method according to one of claims 4 to 7, wherein the image is a moving image and the adaptation is continuously updated.

9. Camera-controlled lighting system comprising a lighting system (2) for illuminating an indoor area, the illumination of the indoor area by the lighting system (2) being adjustable in a lighting system coordinate system, a camera (3) having a field of view overlapping with the indoor area which can be illuminated, and a control unit (4) configured to control the lighting system (2) and to determine and apply a transformation scheme based on an image captured by the camera (3) according to one of the methods of claims 1 to 7.

10. Camera-controlled lighting system according to claim 8, wherein the lighting system (2) comprises a light source in a 2-dimensional rectangular arrangement.

11. Camera-controlled lighting system according to claim 8 or 9, wherein the optical axes of the lighting system (2) and the camera( 3) are aligned.

12. Camera-controlled lighting system according to one of claims 8 to 11, wherein the camera (3) and the lighting system (2) are spatially distributed and the camera (3) and the lighting system (2) are communicatively coupled to the control unit (4).

13. Camera-controlled lighting system according to one of claims 8 to 12, wherein the control unit (4) is integrated into the lighting system (2).

14. Camera-controlled lighting system according to one of claims 8 to 13, wherein the camera (3) is a stereo camera.

## Amended claims

### Amended claims in accordance with Rule 137(2) EPC.

1. A method for calibrating a camera-controlled lighting system having:
- a lighting system (2) for illuminating an indoor area, the illumination of the indoor area by the lighting system (2) being adjustable in a lighting system coordinate system, and
- a camera (3) having a field of view overlapping with the indoor area which can be illuminated, **characterized in that** the method comprising the steps of:
presenting a defined pattern (S4) in an area illuminated by the lighting system (2)
detecting the illuminated pattern (S5) by the camera (3), and
determining, by computing means (4), a transformation scheme (S6) for transforming a camera coordinate system into a coordinate system of the lighting system (1) based on the detected illuminated pattern and storing the determined transformation scheme (S7).

2. Method according to claim 1, wherein the presentation of the defined pattern (S4), detection of the pattern (S5) and determination of the transformation scheme (S6) is triggered by a gesture perceived by the camera (3).

3. Method according to claim 1 or 2, wherein the determination of the transformation scheme (S is based on a plurality of presented patterns.

4. A method for operating a camera-controlled lighting system (1) for illuminating an indoor area, comprising the steps of calibrating a camera-controlled lighting system (1) using the method according to one of claims 1 to 3, , the method further comprising the steps of:
capturing an image (S1) by the camera (3) and identifying at least one object (11) (S8) in the captured image and adapting at least one lighting parameter (S10, S11) with respect to the identified object.

5. Method according to claim 4, wherein the adaption (S10, S11) of the at least one lighting parameter includes at least one of:
- selectively changing a brightness or color of light illuminating the identified object (11) relative to light illuminating the object's environment (S11), and
- generating a light pattern for illuminating the identifying object (11) or its periphery (S11).

6. Method according to claim 4 or 5, wherein the at least one lighting parameter is fixedly maintained for a minimum period of time.

7. Method according to one of claims 4 to 6, wherein the adaption of the at least one lighting parameter is selected according to a gesture (S10) perceived by the camera (3).

8. Method according to one of claims 4 to 7, wherein the image is a moving image and the adaptation is continuously updated.

9. Camera-controlled lighting system comprising a lighting system (2) for illuminating an indoor area, the illumination of the indoor area by the lighting system (2) being adjustable in a lighting system coordinate system, a camera (3) having a field of view overlapping with the indoor area which can be illuminated, and a control unit (4) configured to control the lighting system (2) and to determine and apply a transformation scheme based on an image captured by the camera (3) according to one of the methods of claims 1 to 7.

10. Camera-controlled lighting system according to claim 8, wherein the lighting system (2) comprises a light source in a 2-dimensional rectangular arrangement.

11. Camera-controlled lighting system according to claim 8 or 9, wherein the optical axes of the lighting system (2) and the camera (3) are aligned.

12. Camera-controlled lighting system according to one of claims 8 to 11, wherein the camera (3) and the lighting system (2) are spatially distributed and the camera (3) and the lighting system (2) are communicatively coupled to the control unit (4).

13. Camera-controlled lighting system according to one of claims 8 to 12, wherein the control unit (4) is integrated into the lighting system (2).

14. Camera-controlled lighting system according to one of claims 8 to 13, wherein the camera (3) is a stereo camera.
